# EUROPEAN PATENT SPECIFICATION

(11) **EP 4 440 899 B1**
(45) Date of publication and mention of the grant of the patent: **19.08.2026**
(21) Application number: 22830432.5
(22) Date of filing: 02.12.2022
(51) Int. Cl.: B60W 40/068, B60W 50/14, B60W 60/00, B60K 28/16, B60W 30/04, B60W 30/045, B60W 50/00, B60W 30/18

(54) **METHODS, STORAGE MEDIA AND SYSTEMS FOR ANALYSING THE TIRE-ROAD FRICTION ESTIMATION OF TRAJECTORY CANDIDATES AT PLANNER LEVEL FOR SAFER TRAJECTORY CHOICE IN AUTOMATED VEHICLES**
VERFAHREN, SPEICHERMEDIEN UND SYSTEME ZUR ANALYSE DER REIFEN-STRASSEN-REIBUNGSSCHÄTZUNG VON TRAJEKTORIENKANDIDATEN AUF PLANEREBENE FÜR SICHERERE TRAJEKTORIENWAHL IN AUTOMATISIERTEN FAHRZEUGEN
PROCÉDÉS, SUPPORTS DE STOCKAGE ET SYSTÈMES POUR ANALYSER L'ESTIMATION DE FROTTEMENT PNEU-ROUTE DE TRAJECTOIRES CANDIDATES AU NIVEAU DU PLANIFICATEUR POUR UN CHOIX DE TRAJECTOIRE PLUS SÛR DANS DES VÉHICULES AUTOMATISÉS

(30) Priority: 02.12.2021 BE 202105937
(43) Date of publication of application: 09.10.2024
(73) Proprietor: IVEX N.V., 3001 Leuven (BE)
(72) Inventor: CRUZ TORRES, Mario Henrique, 3001 LEUVEN (BE); ROMANO, Danilo, 3001 LEUVEN (BE); VAQUERO, Victor, 3001 LEUVEN (BE)
(74) Representative: Algemeen Octrooi- en Merkenbureau B.V.
(86) International application number: PCT/EP2022/084286
(87) International publication number: WO 2023/099765

(56) References cited:
- EP-A1- 2 537 727
- EP-A1- 3 738 850
- WO-A1-2014/148989
- US-A1- 2021 300 412
- US-A1- 2021 316 758

## Description

### FIELD OF THE DISCLOSURE

The present invention disclosure relates to methods, systems, storage media and apparatus to analyse the tire-road friction estimation of trajectory candidates at planner level for safer trajectory choice in automated vehicles (AV).

### BACKGROUND

EP3334624B1 granted to Baidu describes a computer-implemented method for operating an autonomous vehicle, wherein a plurality of driving scenarios is determined for a plurality of types of autonomous vehicles. Each driving scenario corresponds to a specific movement of a particular type of autonomous vehicles. Driving statistics of each autonomous vehicle are obtained for each of the plurality of driving scenarios of each type of autonomous vehicles. One or more driving parameters used to control and drive each autonomous vehicle of the type are recorded. A driving condition corresponding the driving scenario is captured. The slideslip caused by the recorded driving parameters and the captured driving condition are captured. However, this document does not disclose the use of a slipping-risk-related safety projection based on the tire-road friction coefficient, the maximum drivable speed and the maximum curvature of the trajectory candidates of the AV.

EP3870489A1 pending to Waymo discloses a computer-implemented method of operating a vehicle in an autonomous driving mode to detect a traction condition. Pose information of the vehicle is obtained from sensors or perception systems. The actual pose of the vehicle on the roadway is determined and compared with an expected pose. The slippage is determined based on whether the difference exceeds a threshold. A corrective driving action is performed in response to the slippage. Alternatively, the route is re-planned. However, this document does not disclose the use of a slipping-risk-related safety projection based on the tire-road friction coefficient, the maximum drivable speed and the maximum curvature of the trajectory candidates of the AV.

EP2583872B1 granted to Autoliv Nissin Brake Systems describes a controller of a vehicle brake. It includes a road surface friction coefficient judging module. This module is configured to judge whether a road surface on which the vehicle is running is at least a low friction coefficient road surface. The antilock braking controlling module performs a turning pressure reduction control only in the case that the road surface is judged to be the low friction coefficient road surface. However, this document does not describe a method wherein the friction coefficient is used at planning level for the trajectory planning of the electronic control unit of an automated vehicle.

US2018164827A1 pending to General Motors discloses a method for generating a vehicle path to operate an autonomous vehicle. A lateral re-entry planner system corrects lateral re-entry errors. A longitudinal re-entry planner system is used to correct a longitudinal re-entry error. Path correction commands are generated based upon the corrections provided by the lateral re-entry planner system and the longitudinal re-entry planner system. The road curvature is calculated through a cost model provided by a solver such that the vehicle slows down around a curve. However, this document does not disclose the use of a slipping-risk-related safety projection based on the tire-road friction coefficient, the maximum drivable speed and the maximum curvature of the trajectory candidates of the AV.

EP2536606B1 granted to Conti Temic Microelectronic and Continental discloses a method for automatically preventing aquaplaning. Information relating to a section of the route and regarding the risk of aquaplaning is provided to the motor vehicle. A camera-based road sign recognition indicates aquaplaning. At least one sensor device for determining a wet roadway is provided. An assistance function is carried out to prevent aquaplaning, if there is a section of the route with a risk of aquaplaning and if a wet roadway is detected. However, this document does not describe a method wherein the friction coefficient is used at planning level for the trajectory planning of the electronic control unit of an automated vehicle.

EP3267421A1 pending to Pioneer and Increment describes a route search device comprising an acquirement unit, a route search unit and environment acquirement unit, an extraction unit and an information unit for the user. However, this document does not describe a method wherein the friction coefficient is used at planning level for the trajectory planning of the electronic control unit of an automated vehicle.

EP3875328A2 to Beijing Baidu Netcom describes a cruise control method. A driving habit weight of at least one candidate driving strategy associated with a target driving environment is acquired. The driving habit weight is determined based on historical driving data of a historical driving device of a driving user. A target driving strategy from the at least one candidate driving strategy according to the driving habit weight is selected. A cruise control on a target driving device of the driving user according to the target driving strategy is performed. However, this document does not describe a method wherein the friction coefficient is used at planning level for the trajectory planning of the electronic control unit of an automated vehicle.

US9994210B2 granted to Robert Bosch GmbH describes a method for ascertaining or evaluating a setpoint trajectory of a motor vehicle. An initial setpoint trajectory is transmitted to an evaluation unit of a vehicle control unit through a trajectory planning unit. A curve of a poser characteristic variable is received. The trajectory planning unit determines a corrected setpoint trajectory as a function of the implementable curve of the power characteristic variable. The propulsion unit is controlled based on the implementable curve of the power characteristic variable. The implementable curve of the power characteristic variable is ascertained as a function of a friction coefficient of a roadway on which the motor vehicle is traveling. However, this document does not describe a method wherein the friction coefficient is used at planning level for the trajectory planning of the electronic control unit of an automated vehicle.

US2019337509A1 to Mobileye describes a navigation system for navigating an autonomous host vehicle according to at least one navigational goal of the host vehicle. The prediction of at least one aspect of host vehicle motion is based on at least one of a determined brake pedal position, a determined throttle position, determined air resistance opposing host vehicle motion, friction, or grade of a road segment on which the host vehicle travels. The document describes the speed as the decisive information. It further discloses following main forces acting on the vehicle: friction; air resistance, gravity, brake friction and engine. The overall force is described as to include a sum of the assistive forces (e.g., throttle, acceleration, gravity when traveling down-hill, etc.) and the resistive forces (e.g., wind-resistance, friction, gravity when traveling up-hill, etc.) and a current speed of the host vehicle may be used to predict a future speed using the overall force. However, this document does not describe a method wherein the friction coefficient is used at planning level for the trajectory planning of the electronic control unit of an automated vehicle.

US2020241541A1 pending to General Motors discloses a method for piecewise sinusoid trajectory planning. Point data defining a current path plan for the ego vehicle is received. the current ego position along the current path plan is determined. The current velocity and an acceleration for the current ego position is determined. This is based in part on a velocity and acceleration derived from a previous trajectory candidates. The trajectory candidates is calculated. A graph with a grid of nodes in the velocity-time domain of the search space connected by edges is set. The graph with a shortest path algorithm is evaluated. The validity and cost with respect to desired constraints of vehicle motion and system limitations of each edge are determined by use of the piecewise sinusoidal path length, velocity, and acceleration profiles. These are parameterized to connect pairs of nodes. The optimal vehicle trajectory is set with the goal to minimize the objective cost function. The path parameters include friction µ(s), grade θ(s) and curvature k(s). However, this document does not describe a method wherein the friction coefficient is used at planning level for the trajectory planning of the electronic control unit of an automated vehicle.

US 2021/316758 A1, EP 3 738 850 A1 and WO 2014/148989 A1 also disclose systems and methods related to defining safe operation conditions for autonomous vehicles.

### SUMMARY

The present inventors have surprisingly found that safer trajectories can be obtained by taking the tire-road friction coefficient already at the planning level into account for determining a safer trajectory. The method of the present invention allows to evaluate candidate trajectories according to a safety criteria taking into account the slipping risk. In one embodiment, evaluate means computing a function of tire road friction, max speed and curvature that contributes to the selection of one among multiple trajectories. Accordingly, the risk of slipping is factored into the trajectory planning decision.

Accordingly, a first aspect of the invention relates to a method (200), comprising:
▪ providing (202) the trajectory candidates of an electronic control unit of an automated vehicle;
▪ determining (204) through the electronic control unit the tire-road friction coefficient, the maximum drivable speed and the maximum curvature of the trajectory candidates of the AV;
▪ determining (206) through the electronic control unit the slipping-risk-related safety projection of the trajectory candidates of the AV, wherein the slipping-risk-related safety projection being a function of the tire-road friction coefficient, the maximum drivable speed and the maximum curvature of the trajectory candidates of the AV;
▪ choosing (208) by the electronic control unit among the trajectory candidates the trajectory with an improved slipping-risk-related safety projection.

Another aspect of the present disclosure relates to a system for analysing the tire-road friction estimation of trajectory candidates at planner level for safer trajectory choices in automated vehicles (AV). The system may include one or more hardware processors configured by machine-readable instructions for analysing the tire-road friction estimation of trajectory candidates at planner level for safer trajectory choices in automated vehicles. The machine-readable instructions may be configured to obtain the trajectory candidates of an electronic control unit of an automated vehicle. The machine-readable instructions may be configured to determine through the electronic control unit the tire-road friction coefficient, the maximum drivable speed and the maximum curvature of the trajectory candidates of the AV. The machine-readable instructions may be configured to determine through the electronic control unit the slipping-risk-related safety projection of the trajectory candidates of the AV. The machine-readable instructions may be configured to choose by the electronic control unit among the trajectory candidates the trajectory with an improved slipping-risk-related safety projection.

Another aspect of the present invention disclosure relates to a computer-readable storage medium according to claim 11.

Another aspect of the present disclosure relates to a system according to claim 12.

### BRIEF DESCRIPTION OF THE DRAWINGS

FIG. 1 illustrates a system configured for analysing the tire-road friction estimation of trajectory candidates at planner level for safer trajectory choices in automated vehicles.
FIG. 2 illustrates a method for analysing the tire-road friction estimation of trajectory candidates at planner level for safer trajectory choices in automated vehicles.

### DETAILED DESCRIPTION

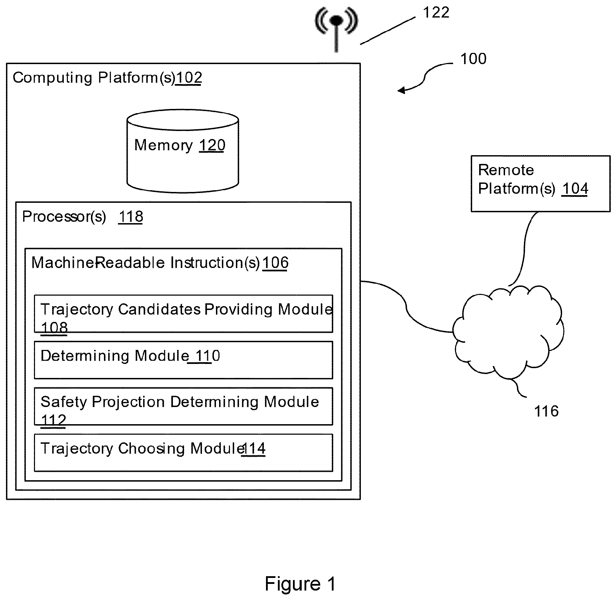

FIG. 1 illustrates a system configured for safer trajectory candidate choice, in accordance with one or more embodiments. In some cases, system 100 may include one or more computing platforms 102. The one or more remote computing platforms 102 may be communicably coupled with one or more remote platforms 104. In some cases, users may access the system 100 via remote platform(s) 104.

The one or more computing platforms 102 may be configured by machine-readable instructions 106. Machine-readable instructions 106 may include modules. The modules may be implemented as one or more of functional logic, hardware logic, electronic circuitry, software modules, and the like. The modules may include one or more of trajectory candidates providing module 108, determining module 110, safety projection determining module 112, trajectory choosing module 114, and/or other modules.

Trajectory candidates providing module 108 may be configured to provide the trajectory candidates of an electronic control unit of an automated vehicle. Determining module 110 may be configured to determine through the electronic control unit the tire-road friction coefficient, the maximum drivable speed and the maximum curvature of the trajectory candidates of the AV. Safety projection determining module 112 may be configured to determine through the electronic control unit the slipping-risk-related safety projection of the trajectory candidates of the AV. The slipping-risk-related safety projection being a function of the tire-road friction coefficient, the maximum drivable speed and the maximum curvature of the trajectory candidates of the AV. Trajectory choosing module 114 may be configured to choose by the electronic control unit among the trajectory candidates the trajectory with an improved slipping-risk-related safety projection.

In some cases, the one or more computing platforms 102, may be communicatively coupled to the remote platform(s) 104. In some cases, the communicative coupling may include communicative coupling through a networked environment 116. The networked environment 116 may be a radio access network, such as LTE or 5G, a local area network (LAN), a wide area network (WAN) such as the Internet, or wireless LAN (WLAN), for example. It will be appreciated that this is not intended to be limiting, and that other implementations in which one or more computing platforms 102 and remote platform(s) 104 may be operatively linked via some other communication coupling are possible. The one or more one or more computing platforms 102 may be configured to communicate with the networked environment 116 via wireless or wired connections. In addition, in an embodiment, the one or more computing platforms 102 may be configured to communicate directly with each other via wireless or wired connections. Examples of one or more computing platforms 102 may include, but is not limited to, smartphones, wearable devices, tablets, laptop computers, desktop computers, Internet of Things (IoT) device, or other mobile or stationary devices. In an embodiment, system 100 may also include one or more hosts or servers, such as the one or more remote platforms 104 connected to the networked environment 116 through wireless or wired connections. According to one embodiment, remote platforms 104 may be implemented in or function as base stations (which may also be referred to as Node Bs or evolved Node Bs (eNBs)). In other embodiments, remote platforms 104 may include web servers, mail servers, application servers, etc. According to certain embodiments, remote platforms 104 may be standalone servers, networked servers, or an array of servers.

In some cases, the relationship between the trajectory curvature and the maximum speed the AV can follow without skidding is: ${v}_{max} = \sqrt{β ∗ g ∗ R}$
where
β is tire-road friction coefficient.
g is gravitation acceleration, 9.81 m/s^2.
R is the radius of the curvature of the trajectory candidates.

In some cases, the current trajectory is used to extract the radius of curvature R.

In some cases, the current tire-road friction coefficient relates to road and tire conditions to determine the friction coefficient. The tire-road friction coefficient may be obtained from a predefined table, a function, or calculated online.

In some cases, the tire-road friction coefficient may be obtained from a pre-defined table, a function, or calculated online. For example, the tire-road friction coefficient may be read from a table or determined. The entry information may be the current detected weather condition, the road condition, the vehicle condition, the tire model, the tire state, or the possible trajectory generated or combinations thereof.

In some cases, the method of the invention further comprises executing by the electronic control unit the trajectory with the best slipping-risk-related safety projection, the electronic control unit of the AV performs safety actions based on the slipping-risk-related safety projection of the chosen trajectory and if the planner choses a trajectory with an unsafe slipping-risk-related safety projection a notification may be sent to the control unit.

In some cases, if the planner choses a trajectory with an unsafe slipping-risk-related safety projection, the control unit executes an action that reduces the risk associated with the unsafe slipping-risk-related safety projection, if the planner choses a trajectory with an unsafe slipping-risk-related safety projection, the control unit executes a break action in order to reduce the risk associated with the unsafe slipping-risk-related safety projection and if the planner choses a trajectory with an unsafe slipping-risk-related safety projection, the control unit executes a reduction of acceleration in order to reduce the risk associated with the unsafe slipping-risk-related safety projection.

In some cases, the tire-road coefficient may be calculated as a function of the road surface condition, the weather condition and the vehicle configuration, the vehicle configuration comprises one or more of the load weight of the AV, the tyre type or the tyre state, or a combination thereof and the tire-road coefficient may be obtained from a predefined table, a function or calculated online.

In some cases, the tire-road coefficient may be 0.7 for dry roads and the tire-road coefficient may be 0.4 for wet roads for standard vehicles.

In some cases, the one or more computing platforms 102, may be communicatively coupled to the remote platform(s) 104.

In some cases, the communicative coupling may include communicative coupling through a networked environment 116. The networked environment 116 may be a radio access network, such as LTE or 5G, a local area network (LAN), a wide area network (WAN) such as the Internet, or wireless LAN (WLAN), for example.It will be appreciated that this is not intended to be limiting, and other implementations in which one or more computing platforms 102 and remote platform(s) 104 may be operatively linked via some other communication coupling are possible. The one or more one or more computing platforms 102 may be configured to communicate with the networked environment 116 via wireless or wired connections. In addition, in an embodiment, the one or more computing platforms 102 may be configured to communicate directly with each other via wireless or wired connections. Examples of one or more computing platforms 102 may include, but is not limited to, smartphones, wearable devices, tablets, laptop computers, desktop computers, Internet of Things (IoT) device, or other mobile or stationary devices.

In an embodiment, system 100 may also include one or more hosts or servers, such as the one or more remote platforms 104 connected to the networked environment 116 through wireless or wired connections.

According to one embodiment, remote platforms 104 may be implemented in or function as base stations (which may also be referred to as Node Bs or evolved Node Bs (eNBs)).

In other embodiments, remote platforms 104 may include web servers, mail servers, application servers, etc.

According to certain embodiments, remote platforms 104 may be standalone servers, networked servers, or an array of servers.

The one or more computing platforms 102 may include one or more processors 118 for processing information and executing instructions or operations. One or more processors 118 may be any type of general or specific purpose processor. In some cases, multiple processors 118 may be utilized according to other embodiments. In fact, the one or more processors 118 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. In some cases, the one or more processors 118 may be remote from the one or more computing platforms 102, such as disposed within a remote platform like the one or more remote platforms 104 of Fig. 1.

The one or more processors 118 may perform functions associated with the operation of system 100 which may include, for example, precoding of antenna gain/phase parameters, encoding and decoding of individual bits forming a communication message, formatting of information, and overall control of the one or more computing platforms 102, including processes related to management of communication resources.

The one or more computing platforms 102 may further include or be coupled to a memory 116 (internal or external), which may be coupled to one or more processors 118 for storing information and instructions that may be executed by one or more processors 118 Memory 116 may be one or more memories and of any type suitable to the local application environment, and may be implemented using any suitable volatile or nonvolatile data storage technology such as a semiconductor-based memory device, a magnetic memory device and system, an optical memory device and system, fixed memory, and removable memory. For example, memory 116 can consist of any combination of random access memory (RAM), read only memory (ROM), static storage such as a magnetic or optical disk, hard disk drive (HDD), or any other type of non-transitory machine or computer readable media. The instructions stored in memory 116 may include program instructions or computer program code that, when executed by one or more processors 118, enable the one or more computing platforms 102 to perform tasks as described herein.

In some embodiments, one or more computing platforms 102 may also include or be coupled to one or more antennas for transmitting and receiving signals and/or data to and from one or more computing platforms 102. The one or more antennas may be configured to communicate via, for example, a plurality of radio interfaces that may be coupled to the one or more antennas. The radio interfaces may correspond to a plurality of radio access technologies including one or more of LTE, 5G, WLAN, Bluetooth, near field communication (NFC), radio frequency identifier (RFID), ultrawideband (UWB), and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (for example, via an uplink).

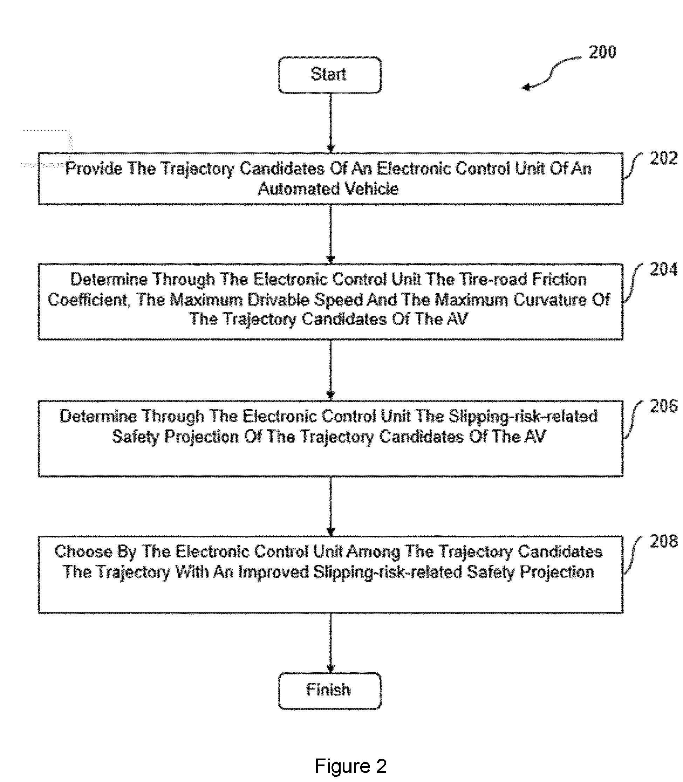

Fig. 2 illustrate an example flow diagram of a method 200, according to one embodiment. The method 200 may include providing the trajectory candidates of an electronic control unit of an automated vehicle at block 202. The method 200 may include determining through the electronic control unit the tire-road friction coefficient, the maximum drivable speed and the maximum curvature of the trajectory candidates of the AV at block 204. The method 200 may include determining through the electronic control unit the slipping-risk-related safety projection of the trajectory candidates of the AV at block 206, the slipping-risk-related safety projection being a function of the tire-road friction coefficient, the maximum drivable speed and the maximum curvature of the trajectory candidates of the AV. The method 200 may include choosing by the electronic control unit among the trajectory candidates the trajectory with an improved slipping-risk-related safety projection at block 208.

In some cases, the method 200 may be performed by one or more hardware processors, such as the processors 118 of Fig. 1, configured by machine-readable instructions, such as the machine readable instructions 106 of Fig. 1. In this aspect, the method 200 may be configured to be implemented by the modules, such as the modules 108, 110, 112 and/or 114 discussed above in Fig. 1.

## Claims

1. A method (200), comprising:
▪ providing (202) trajectory candidates of an electronic control unit of an automated vehicle (AV);
▪ determining (204) through the electronic control unit the tire-road friction coefficient, the maximum drivable speed and the maximum curvature of the trajectory candidates of the AV;
▪ determining (206) through the electronic control unit the slipping-risk-related safety projection of the trajectory candidates of the AV, wherein the slipping-risk-related safety projection being a function of the tire-road friction coefficient, the maximum drivable speed and the maximum curvature of the trajectory candidates of the AV;
▪ choosing (208) by the electronic control unit among the trajectory candidates the trajectory with an improved slipping-risk-related safety projection.

2. The method of claim 1, wherein the method further comprises executing by the electronic control unit the trajectory with the best slipping-risk-related safety projection.

3. The method of any of the preceding claims, wherein the electronic control unit of the AV performs safety actions based on the slipping-risk-related safety projection of the chosen trajectory.

4. The method of any of the preceding claims, wherein if the electronic control unit choses a trajectory candidate with an unsafe slipping-risk-related safety projection a notification is sent to the control unit.

5. The method any of the preceding claims, wherein if the electronic control unit choses a trajectory candidate
with an unsafe slipping-risk-related safety projection, the control unit executes an action that reduces the risk associated with the unsafe slipping-risk-related safety projection.

6. The method any of the preceding claims, wherein if the electronic control unit choses a trajectory candidate
with an unsafe slipping-risk-related safety projection, the control unit executes a break action in order to reduce the risk associated with the unsafe slipping-risk-related safety projection.

7. The method of any of the preceding claims, wherein if the electronic control unit choses a trajectory candidate with an unsafe slipping-risk-related safety projection, the control unit executes a reduction of acceleration in order to reduce the risk associated with the unsafe slipping-risk-related safety projection.

8. **The** method any of the preceding claims, wherein the tire-road coefficient is calculated as a function of the road surface condition, the weather condition and the vehicle configuration.

9. **The** method of any of the preceding claims, wherein the vehicle configuration comprises one or more of the load weight of the AV, the tyre type or the tyre state, or a combination thereof.

10. **The** method of any of the preceding claims, wherein the tire-road coefficient is obtained from a predefined table, a function or calculated online.

11. A non-transient computer-readable storage medium (116) comprising instructions (106) being executable by one or more processors (118) to perform a method, the method comprising:
▪ providing trajectory candidates of an electronic control unit of an automated vehicle;
▪ determining through the electronic control unit the tire-road friction coefficient, the maximum drivable speed and the maximum curvature of the trajectory candidates of the AV;
▪ determining through the electronic control unit the slipping-risk-related safety projection of the trajectory candidates of the AV, wherein the slipping-risk-related safety projection being a function of the tire-road friction coefficient, the maximum drivable speed and the maximum curvature of the trajectory candidates of the AV;
▪ choosing by the electronic control unit among the trajectory candidates the trajectory with an improved slipping-risk-related safety projection.

12. A system (100), comprising at least one non-transient computer-readable storage medium (116) storing computer program instructions (106); and at least one processor (118) configured to execute the computer program instructions to cause the apparatus at least to:
▪ providing trajectory candidates of an electronic control unit of an automated vehicle;
▪ determining through the electronic control unit the tire-road friction coefficient, the maximum drivable speed and the maximum curvature of the trajectory candidates of the AV;
▪ determining through the electronic control unit the slipping-risk-related safety projection of the trajectory candidates of the AV, wherein the slipping-risk-related safety projection being a function of the tire-road friction coefficient, the maximum drivable speed and the maximum curvature of the trajectory candidates of the AV;
▪ choosing by the electronic control unit among the trajectory candidates the trajectory with an improved slipping-risk-related safety projection.

## Patentansprüche

1. Verfahren (200), umfassend:
• Bereitstellen (202) von Trajektorienkandidaten einer elektronischen Steuereinheit eines automatisierten Fahrzeugs (AV);
• Bestimmen (204), durch die elektronische Steuereinheit, des Reifen-Straßen-Reibungskoeffizienten, der maximalen fahrbaren Geschwindigkeit und der maximalen Krümmung der Trajektorienkandidaten des AV;
• Bestimmen (206), durch die elektronische Steuereinheit, der rutschrisikobezogenen Sicherheitsprojektion der Trajektorienkandidaten des AV, wobei die rutschrisikobezogene Sicherheitsprojektion eine Funktion des Reifen-Straßen-Reibungskoeffizienten, der maximalen fahrbaren Geschwindigkeit und der maximalen Krümmung der Trajektorienkandidaten des AV ist;
• Auswählen (208), durch die elektronische Steuereinheit, unter den Trajektorienkandidaten der Trajektorie mit einer verbesserten rutschrisikobezogenen Sicherheitsprojektion.

2. Verfahren nach Anspruch 1, wobei das Verfahren ferner das Ausführen, durch die elektronische Steuereinheit, der Trajektorie mit der besten rutschrisikobezogenen Sicherheitsprojektion umfasst.

3. Verfahren nach einem der vorhergehenden Ansprüche, wobei die elektronische Steuereinheit des AV Sicherheitsaktionen basierend auf der rutschrisikobezogenen Sicherheitsprojektion der ausgewählten Trajektorie durchführt.

4. Verfahren nach einem der vorhergehenden Ansprüche, wobei, wenn die elektronische Steuereinheit einen Trajektorienkandidaten mit einer unsicheren rutschrisikobezogenen Sicherheitsprojektion auswählt, eine Benachrichtigung an die Steuereinheit gesendet wird.

5. Verfahren nach einem der vorhergehenden Ansprüche, wobei, wenn die elektronische Steuereinheit einen Trajektorienkandidaten mit einer unsicheren rutschrisikobezogenen Sicherheitsprojektion auswählt, die Steuereinheit eine Aktion ausführt, die das mit der unsicheren rutschrisikobezogenen Sicherheitsprojektion verbundene Risiko reduziert.

6. Verfahren nach einem der vorhergehenden Ansprüche, wobei, wenn die elektronische Steuereinheit einen Trajektorienkandidaten mit einer unsicheren rutschrisikobezogenen Sicherheitsprojektion auswählt, die Steuereinheit eine Unterbrechungsaktion ausführt, um das mit der unsicheren rutschrisikobezogenen Sicherheitsprojektion verbundene Risiko zu reduzieren.

7. Verfahren nach einem der vorhergehenden Ansprüche, wobei, wenn die elektronische Steuereinheit einen Trajektorienkandidaten mit einer unsicheren rutschrisikobezogenen Sicherheitsprojektion auswählt, die Steuereinheit eine Beschleunigungsreduzierung ausführt, um das mit der unsicheren rutschrisikobezogenen Sicherheitsprojektion verbundene Risiko zu reduzieren.

8. Verfahren nach einem der vorhergehenden Ansprüche, wobei der Reifen-Straßen-Koeffizient als eine Funktion des Straßenoberflächenzustands, der Wetterbedingung und der Fahrzeugkonfiguration berechnet wird.

9. Verfahren nach einem der vorhergehenden Ansprüche, wobei die Fahrzeugkonfiguration eines oder mehrere von dem Lastgewicht des AV, dem Reifentyp oder dem Reifenzustand oder einer Kombination davon umfasst.

10. Verfahren nach einem der vorhergehenden Ansprüche, wobei der Reifen-Straßen-Koeffizient aus einer vordefinierten Tabelle, einer Funktion oder online berechnet erhalten wird.

11. Nicht flüchtiges computerlesbares Speichermedium (116), das Anweisungen (106) umfasst, die durch einen oder mehrere Prozessoren (118) ausführbar sind, um ein Verfahren durchzuführen, wobei das Verfahren Folgendes umfasst:
• Bereitstellen von Trajektorienkandidaten einer elektronischen Steuereinheit eines automatisierten Fahrzeugs;
• Bestimmen, durch die elektronische Steuereinheit, des Reifen-Straßen-Reibungskoeffizienten, der maximalen fahrbaren Geschwindigkeit und der maximalen Krümmung der Trajektorienkandidaten des AV;
• Bestimmen, durch die elektronische Steuereinheit, der rutschrisikobezogenen Sicherheitsprojektion der Trajektorienkandidaten des AV, wobei die rutschrisikobezogene Sicherheitsprojektion eine Funktion des Reifen-Straßen-Reibungskoeffizienten, der maximalen fahrbaren Geschwindigkeit und der maximalen Krümmung der Trajektorienkandidaten des AV ist;
• Auswählen, durch die elektronische Steuereinheit, unter den Trajektorienkandidaten der Trajektorie mit einer verbesserten rutschrisikobezogenen Sicherheitsprojektion.

12. System (100), umfassend mindestens ein nicht flüchtiges computerlesbares Speichermedium (116), das Computerprogrammanweisungen (106) speichert; und mindestens einen Prozessor (118), der dazu konfiguriert ist, die Computerprogrammanweisungen auszuführen, um die Vorrichtung mindestens zu Folgendem zu veranlassen:
• Bereitstellen von Trajektorienkandidaten einer elektronischen Steuereinheit eines automatisierten Fahrzeugs;
• Bestimmen, durch die elektronische Steuereinheit, des Reifen-Straßen-Reibungskoeffizienten, der maximalen fahrbaren Geschwindigkeit und der maximalen Krümmung der Trajektorienkandidaten des AV;
• Bestimmen, durch die elektronische Steuereinheit, der rutschrisikobezogenen Sicherheitsprojektion der Trajektorienkandidaten des AV, wobei die rutschrisikobezogene Sicherheitsprojektion eine Funktion des Reifen-Straßen-Reibungskoeffizienten, der maximalen fahrbaren Geschwindigkeit und der maximalen Krümmung der Trajektorienkandidaten des AV ist;
• Auswählen, durch die elektronische Steuereinheit, unter den Trajektorienkandidaten der Trajektorie mit einer verbesserten rutschrisikobezogenen Sicherheitsprojektion.

## Revendications

1. Procédé (200) comprenant :
• la fourniture (202) de trajectoires candidates d'une unité de commande électronique d'un véhicule automatisé (AV) ;
• la détermination (204) via l'unité de commande électronique du coefficient de frottement pneu-route, de la vitesse praticable maximale et de la courbure maximale des trajectoires candidates de l'AV ;
• la détermination (206) via l'unité de commande électronique de la projection de sécurité liée au risque de glissement des trajectoires candidates de l'AV, dans lequel la projection de sécurité liée au risque de glissement est une fonction du coefficient de frottement pneu-route, de la vitesse praticable maximale et de la courbure maximale des trajectoires candidates de l'AV ;
• le choix (208) par l'unité de commande électronique parmi les trajectoires candidates de la trajectoire avec une projection de sécurité liée au risque de glissement, améliorée.

2. Procédé selon la revendication 1, dans lequel le procédé comprend en outre l'exécution par l'unité de commande électronique de la trajectoire avec la meilleure projection de sécurité liée au risque de glissement.

3. Procédé selon l'une quelconque des revendications précédentes, dans lequel l'unité de commande électronique de l'AV effectue des actions de sécurité sur la base de la projection de sécurité liée au risque de glissement de la trajectoire choisie.

4. Procédé selon l'une quelconque des revendications précédentes, dans lequel si l'unité de commande électronique choisit une trajectoire candidate avec une projection de sécurité liée au risque de glissement dangereuse, une notification est envoyée à l'unité de commande.

5. Procédé selon l'une quelconque des revendications précédentes, dans lequel si l'unité de commande électronique choisit une trajectoire candidate avec une projection de sécurité liée au risque de glissement dangereuse, l'unité de commande exécute une action qui réduit le risque associé à la projection de sécurité liée au risque de glissement dangereuse.

6. Procédé selon l'une quelconque des revendications précédentes, dans lequel si l'unité de commande électronique choisit une trajectoire candidate avec une projection de sécurité liée au risque de glissement dangereuse, l'unité de commande exécute une action de rupture afin de réduire le risque associé à la projection de sécurité liée au risque de glissement dangereuse.

7. Procédé selon l'une quelconque des revendications précédentes, dans lequel si l'unité de commande électronique choisit une trajectoire candidate avec une projection de sécurité liée au risque de glissement dangereuse, l'unité de commande exécute une réduction de l'accélération afin de réduire le risque associé à la projection de sécurité liée au risque de glissement dangereuse.

8. Procédé selon l'une quelconque des revendications précédentes, dans lequel le coefficient pneu-route est calculé en fonction de la condition de la surface de la route, de la condition météorologique et de la configuration du véhicule.

9. Procédé selon l'une quelconque des revendications précédentes, dans lequel la configuration de véhicule comprend un ou plusieurs éléments parmi le poids de charge de l'AV, le type de pneu ou l'état de pneu, ou une combinaison de ceux-ci.

10. Procédé selon l'une quelconque des revendications précédentes, dans lequel le coefficient pneu-route est obtenu à partir d'une table prédéfinie, d'une fonction ou calculé en ligne.

11. Support de stockage lisible par ordinateur non transitoire (116) comprenant des instructions (106) pouvant être exécutées par un ou plusieurs processeurs (118) pour réaliser un procédé, le procédé comprenant :
• la fourniture de trajectoires candidates d'une unité de commande électronique d'un véhicule automatisé ;
• la détermination via l'unité de commande électronique du coefficient de frottement pneu-route, de la vitesse praticable maximale et de la courbure maximale des trajectoires candidates de l'AV ;
• la détermination via l'unité de commande électronique de la projection de sécurité liée au risque de glissement des trajectoires candidates de l'AV, dans lequel la projection de sécurité liée au risque de glissement est une fonction du coefficient de frottement pneu-route, de la vitesse praticable maximale et de la courbure maximale des trajectoires candidates de l'AV ;
• le choix par l'unité de commande électronique parmi les trajectoires candidates de la trajectoire avec une projection de sécurité liée au risque de glissement, améliorée.

12. Système (100), comprenant au moins un support de stockage lisible par ordinateur non transitoire (116) stockant des instructions de programme informatique (106) ; et au moins un processeur (118) configuré pour exécuter les instructions de programme informatique pour amener l'appareil à au moins :
• fournir des trajectoires candidates d'une unité de commande électronique d'un véhicule automatisé ;
• déterminer via l'unité de commande électronique le coefficient de frottement pneu-route, la vitesse praticable maximale et la courbure maximale des trajectoires candidates de l'AV ;
• déterminer via l'unité de commande électronique la projection de sécurité liée au risque de glissement des trajectoires candidates de l'AV, dans lequel la projection de sécurité liée au risque de glissement est une fonction du coefficient de frottement pneu-route, de la vitesse praticable maximale et de la courbure maximale des trajectoires candidates de l'AV ;
• choisir par l'unité de commande électronique parmi les trajectoires candidates la trajectoire avec une projection de sécurité liée au risque de glissement, améliorée.
